# EUROPEAN PATENT SPECIFICATION

(11) **EP 1 524 719 B1**
(45) Date of publication and mention of the grant of the patent: **13.12.2006**
(21) Application number: 04024522.7
(22) Date of filing: 14.10.2004
(51) Int. Cl.: H01Q 1/06, H01Q 1/24, H01Q 3/24, H01Q 1/38, H04B 7/08, H04B 1/40

(54) **Wireless communication system capable of visually indicating failure of transmission and reception states**
Funkkommunikationssystem mit visueller Fehlerangabe des Sende-/Empfangsstatus
Système de communication sans fil indiquant les erreurs des états de transmission et réception

(30) Priority: 15.10.2003 JP 2003355607
(43) Date of publication of application: 20.04.2005
(73) Proprietor: ALPS ELECTRIC CO., LTD., Tokyo 145-8501 (JP)
(72) Inventor: Watanabe, Fumio, c/o Alps Electric Co., Ltd., Tokyo 145-8501 (JP)
(74) Representative: Klunker . Schmitt-Nilson . Hirsch

(56) References cited:
- DE-U1- 20 021 145
- US-B1- 6 438 391
- US-B1- 6 545 643
- PATENT ABSTRACTS OF JAPAN vol. 018, no. 577 (E-1625), 4 November 1994 (1994-11-04) -& JP 06 216618 A (CANON INC), 5 August 1994 (1994-08-05)
- PATENT ABSTRACTS OF JAPAN vol. 2000, no. 06, 22 September 2000 (2000-09-22) -& JP 2000 077919 A (T O D KK), 14 March 2000 (2000-03-14)
- PATENT ABSTRACTS OF JAPAN vol. 2000, no. 25, 12 April 2001 (2001-04-12) -& JP 2001 217620 A (SUDA YOSHIMITSU), 10 August 2001 (2001-08-10)
- PATENT ABSTRACTS OF JAPAN vol. 2002, no. 11, 6 November 2002 (2002-11-06) -& JP 2002 198714 A (TSUCHIYA KEN), 12 July 2002 (2002-07-12)

## Description

### BACKGROUND OF THE INVENTION

### 1. Field of the Invention

The present invention relates to a wireless communication system, and more particularly, to a wireless communication system configured to visually indicate the occurrence and extent of failure in a reception state or a transmission state.

### 2. Description of the Related Art

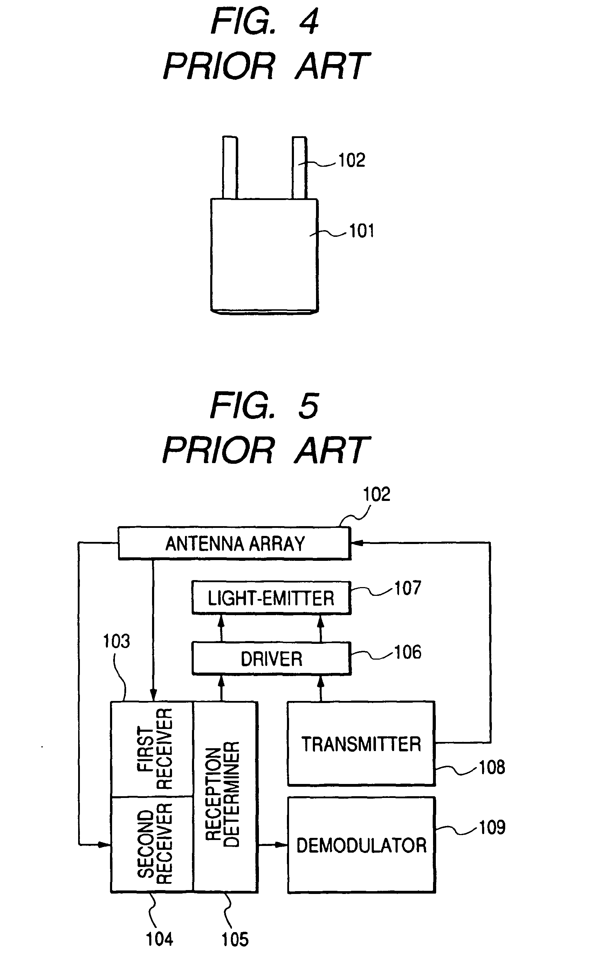

A conventional wireless communication system will be described with reference to Figs. 4 and 5. In detail, Fig. 4 shows an external appearance of the conventional wireless communication system, and Fig. 5 is a block diagram of the conventional wireless communication system.

In Figs. 4 and 5, an antenna array 102 is mounted on a main body 101 of the wireless communication system and various circuits are provided in the main body 101. When communication is carried out so that a transmission wave is output from a transmitter 108 and a transmission signal is output to a driver 106, the driver 106 turns on a lamp provided in a light-emitter 107. The lamp is provided in the light-emitter 107 for transmission.

On the other hand, for reception, receivers 103 and 104 receive and detect waves supplied from various antenna elements of the antenna array 102, respectively, and reception levels thereof are determined by a reception determiner 105. An antenna element having a higher reception level is selected by the reception determiner 105 and a reception wave thereof is transmitted to a demodulator 109. In addition, the reception determiner 105 transmits information on the selected antenna element to the driver 106. Then, the driver 106 turns on the lamp of the light-emitter 107 allocated to the selected antenna element. Light produced when the lamp is turned on is transmitted outside through an optical fiber (not shown) and the like, for example.

If the receiver 103 is continuously selected, the corresponding lamp is continuously turned on. If any change in the reception state occurs so that reception intensity of the receiver 104 increases, the reception determiner 105 transmits a signal supplied from the receiver 104 to the demodulator 109 and transmits information on a newly selected antenna element to the driver 106. Then, the driver 106 turns the currently lit lamp off, and turns on a light-emitter allocated to the newly selected antenna element (for example, see Japanese Unexamined Patent Application Publication No. 06-216618 (Figs. 1 and 2)).

However, in the conventional wireless communication system, a driver is provided in order to emit light from an antenna, which makes the system expensive. In addition, another drawback of the conventional wireless communication system is the difficulty of visually indicating the occurrence of failure in the reception state or transmission state.

In US 6 438 391 B1 a laser diode antenna for a mobile phone is disclosed, wherein a radio frequency signal is picked up by the antenna and is rectified to produce a direct current for lighting the laser diode. The antenna assembly has a transparent window for the emitted light from the laser diode. During operation, a coil picks up electromagnetic waves transmitted by a calling party, wherein the radio frequency signal is rectified by a detector into dc current. This dc current energises the laser diode.

In JP 2002 198714 A there is disclosed a radio wave radiation display device having pattern conductor sections acting like a reception antenna on a printed circuit board. An inductor, a radio wave diode and a light emitting diode are placed between the pattern conductor sections for realising the radio wave radiation display device with a low profile as a whole.

### SUMMARY OF THE INVENTION

Accordingly, the present invention is designed to solve the above problems, and it is an object of the present invention to provide a wireless communication system with a simplified structure by which the occurrence of failure in a reception state or a transmission state can be visually indicated.

To achieve the above object, in a first aspect of the present invention, there is provided a wireless communication system according to claim 1, particularly comprising a transceiver body having a transmitter and a receiver, and an external antenna array having an antenna element and connected to the transceiver body, wherein a light emitting diode (LED) that emits light by a transmission signal transmitted from the transmitter to the antenna element and a reception signal supplied from the antenna element to the receiver is provided in the external antenna array, so that the LED is visually perceived from the outside.

The antenna array includes a feeding line for connecting the antenna element to the transceiver body and a closed loop circuit having the LED inserted thereto in series, the closed loop circuit being connected to the feeding line.

The closed loop circuit includes a connection line disposed parallel to the feeding line to be connected thereto, and resistors connected in series at both ends of the connection line, the LED being inserted between the two resistors.

In another aspect of the present invention, a substrate on which the antenna element is mounted is accommodated in the external antenna array, and the feeding line and the closed loop circuit are disposed on the substrate.

In another aspect of the present invention, a detecting diode is inserted into the LED in series.

### BRIEF DESCRIPTION OF THE DRAWINGS

Fig. 1 is a diagram illustrating the external appearance of a wireless communication system according to the present invention;
Fig. 2 is a block diagram of the wireless communication system according to the present invention;
Fig. 3 is an internal perspective view of an external antenna array in the wireless communication system according to the present invention;
Fig. 4 is a diagram illustrating the external appearance of a conventional wireless communication system; and
Fig. 5 is a block diagram of the conventional wireless communication system.

### DESCRIPTION OF THE PREFERRED EMBODIMENT

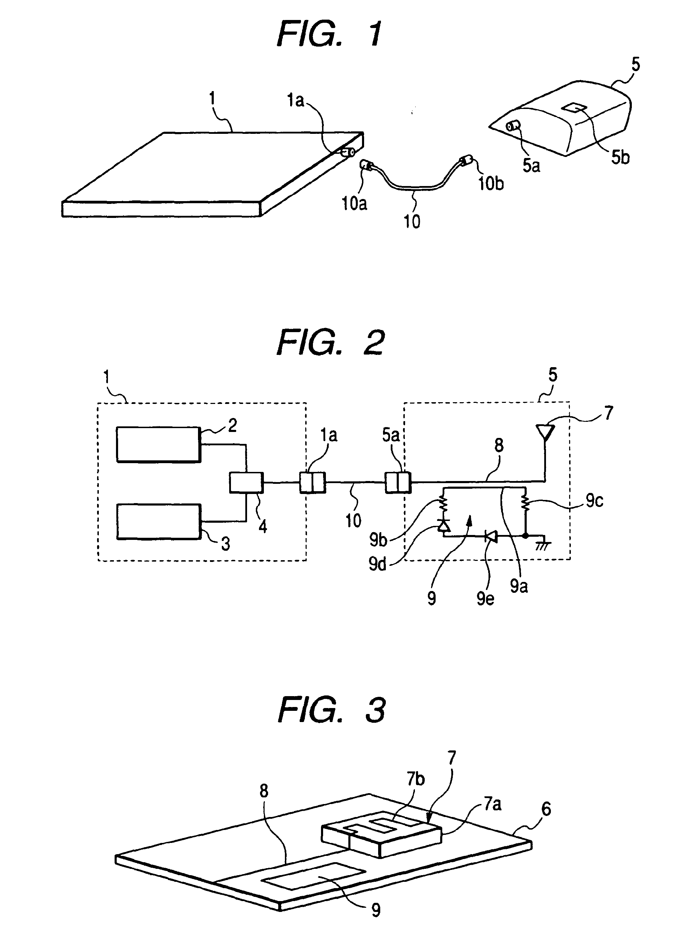

A wireless communication system according to the present invention will now be described with reference to Figs. 1 to 3. Fig. 1 is a diagram illustrating the external appearance of a wireless communication system according to the present invention, Fig. 2 is a block diagram of the wireless communication system according to the present invention, and Fig. 3 is an internal perspective view of an external antenna array in the wireless communication system according to the present invention. In Figs. 1 to 3, a connector 1a for connecting an external antenna array 2 is mounted on a lateral surface of a card-type transceiver body 1 for wireless LAN, and a transmitter 2 and a receiver 3 are provided inside the transceiver body 1. Further, the transmitter 2 and the receiver 3 are connected to the connector 1a via an antenna switch 4. The transceiver body 1 is mounted on a personal computer in a state in which the connector 1a protrudes outwardly.

As shown in Fig. 1, an external antenna array 5 is hemispherical and a surface thereof is covered by a resin case. A connector 5a for connecting the external antenna array 5 to the transceiver body 1 is mounted on a lateral surface of the external antenna array 5, and a small window 5b enclosed with a transparent acryl plate (not shown) is provided on a top surface of the external antenna array 5. In addition, a substrate 6 is accommodated in the external antenna array 5, and an antenna element 7 is mounted on the substrate 6. The antenna element 7 comprises a dielectric block 7a and a meandering antenna line 7b coated on the surface of the dielectric block 7a. The antenna line 7b is connected to a feeding line 8 disposed on the substrate 6. In addition, the feeding line 8 is connected to the connector 5a.

A closed loop circuit 9 connected to the feeding line 8 is provided on the substrate 6. The closed loop circuit 9 comprises a connection line 9a disposed parallel to the feeding line 8 so as to be connected to the feeding line 8, and a detecting diode 9d and a light-emitting diode (LED) 9e, which form a closed loop together with resistors 9b and 9c connected in series at both ends of the connection line 9a. Further, the LED 9e may be provided directly under the window 5b to be mounted on the substrate 6, or may be attached to a case from the internal side of the window 5b.

The transceiver body 1 and the external antenna array 5 are connected to each other through a cable 10. Connectors 10a and 10b are provided at both ends of the cable 10. The connector 10a is connected to the connector 1a of the transceiver body 1, and the connector 10b is connected to the connector 5a of the external antenna array 5.

In the above-mentioned configuration, when the external antenna array 5 is connected to the transceiver body 1, a transmission signal output from the transmitter 2 and a reception signal output from the antenna element 7 pass through the feeding line 8. However, in this case, the connection line 9a of the closed loop circuit 9 is connected to the feeding line 8 so that a current flows the connection line 9a. Thus, the transmission signal or the reception signal can be detected by means of the detecting diode 9d. Then, the LED 9e is allowed to emit light by a detection voltage. The light emitted from the LED 9e is proportional to the intensity of a transmission signal or a reception signal. Such an emission state can be visually perceived through the window 5b provided in the external antenna array 6 easily. Therefore, since the intensity of the signal is determined by the amount of light, the optimal reception or transmission state can be obtained by varying the direction of the external antenna array 5.

Since the LED 9e emits light using the transmission signal or the reception signal as an energy source, emission of light can be achieved only by inserting the LED 9e into the closed loop circuit 9. Also, since the resistors 9b and 9c are connected to both ends of the connection line 9a, there is substantially no a rapid change in the impedance of the feeding line 8. Further, the LED 9e itself can perform the detection and then can emit light without using the detecting diode 9d.

According to the present invention, the wireless communication system comprises a transceiver body and an external antenna array. A light emitting diode (LED) that emits light by a transmission signal transmitted from the transmitter to the antenna element and a reception signal supplied from the antenna element to the receiver is provided in the external antenna array. Further, since the LED is provided so as to be visually perceived from the outside, the LED emits light according to the intensity of the transmission signal or the reception signal, which is visually perceived from the outside. Therefore, the optimal reception or transmission state can be obtained by varying the direction of the external antenna array.

Further, in the antenna array, a feeding line for connecting the antenna element to the transceiver body and a closed loop circuit in which the LED is inserted in series are provided, and the closed loop circuit is connected to the feeding line. Thus, the LED is allowed to emit light using the transmission signal or the reception signal.

Furthermore, the closed loop circuit includes a connection line disposed parallel to the feeding line to be connected thereto, and resistors connected in series at both ends of the connection line. Also, the LED is inserted between the two resistors. Thus, there is substantially no rapid change in the impedance of the feeding line.

Furthermore, a substrate on which the antenna element is mounted is accommodated in the external antenna array, and the feeding line and the closed loop circuit are provided on the substrate. Thus, the feeding line and the closed loop circuit can be easily connected to each other.

Furthermore, since the detecting diode is inserted into the LED in series, it is possible to increase detection sensitivity.

## Claims

1. A wireless communication system comprising:
a transceiver body (1) having a transmitter (2) and a receiver (3); and
an external antenna array (5) having an antenna element (7) and connected to the transceiver body,
wherein a light emitting diode (9e) that emits light by a transmission signal transmitted from the transmitter to the antenna element and a reception signal supplied from the antenna element to the receiver is provided in the external antenna array, so that the light emitting diode is visually perceived from outside,
**characterized in that**
the antenna array comprises a feeding line (8) for connecting the antenna element (7) to the transceiver body (1), and a closed loop circuit (9) having the light emitting diode (9e) inserted thereto in series, the closed loop circuit being connected to the feeding line, wherein the closed loop circuit (9) includes a connection line (9a) disposed parallel to the feeding line (8) to be connected thereto, and resistors (9b, 9c) connected in series at both ends of the connection line, the light emitting diode (9e) being inserted between the two resistors.

2. The wireless communication system according to claim 1,
wherein a substrate (6) on which the antenna element (7) is mounted is accommodated in the external antenna array, and the feeding line (8) and the closed loop circuit (9) are disposed on the substrate.

3. The wireless communication system according to any of claims 1 or 2,
wherein a detecting diode (9d) is inserted to the light emitting diode (9e) in series.

## Patentansprüche

1. Drahtloses Kommunikationssystem, aufweisend:
einen Sender-Empfänger-Körper (1), der einen Sender (2) und einen Empfänger (3) aufweist; und
eine externe Antennenanordnung (5), die ein Antennenelement (7) aufweist und mit dem Sender-Empfänger-Körper verbunden ist,
wobei in der externen Antennenanordnung eine lichtemittierende Diode (9e), die Licht aufgrund eines von dem Sender zu dem Antennenelement gesendeten Sendesignals sowie eines von dem Antennenelement dem Empfänger zugeführten Empfangssignals emittiert, derart angeordnet ist, dass die lichtemittierende Diode von außen visuell wahrnehmbar ist,
**dadurch gekennzeichnet,**
**dass** die Antennenanordnung eine Speiseleitung (8) zum Verbinden des Antennenelements (7) mit dem Sender-Empfänger-Körper (1) sowie einen geschlossenen Regelkreis (9) aufweist, in den die lichtemittierende Diode (9e) in Reihenschaltung eingefügt ist, wobei der geschlossene Regelkreis mit der Speiseleitung verbunden ist, und dass der geschlossene Regelkreis (9) eine Verbindungsleitung (9a), die parallel zu der mit dieser zu verbindenden Speiseleitung (8) angeordnet ist, sowie Widerstände (9b, 9c) aufweist, die an beiden Enden der Verbindungsleitung in Reihe geschaltet sind, wobei die lichtemittierende Diode (9e) zwischen den beiden Widerständen angeordnet ist.

2. Drahtloses Kommunikationssystem nach Anspruch 1,
wobei ein Substrat (6), auf dem das Antennenelement (7) angebracht ist, in der externen Antennenanordnung untergebracht ist und die Speiseleitung (8) und der geschlossene Regelkreis (9) auf dem Substrat angeordnet sind.

3. Drahtloses Kommunikationssystem nach Anspruch 1 oder 2,
wobei eine Detektionsdiode (9d) zu der lichtemittierenden Diode (9e) in Reihe geschaltet ist.

## Revendications

1. Système de communication sans fil comprenant :
un corps d'émetteur-récepteur (1) comportant un émetteur (2) et un récepteur (3) ; et
une antenne réseau extérieure (5) comportant un élément d'antenne (7) et connectée au corps d'émetteur-récepteur,
dans lequel une diode électroluminescente (9e) qui émet de la lumière au moyen d'un signal de transmission transmis par l'émetteur à l'élément d'antenne et d'un signal de réception transmis de l'élément d'antenne au récepteur est placée dans l'antenne réseau extérieure, de telle manière que la diode électroluminescente est perçue visuellement de l'extérieur,
**caractérisé en ce que** l'antenne réseau comprend une ligne d'alimentation (8) pour connecter l'élément d'antenne (7) au corps d'émetteur-récepteur (1), et un circuit en boude fermée (9) dans lequel est insérée la diode électroluminescente (9e) en série, le circuit en boucle fermée étant connecté à la ligne d'alimentation, le circuit en boude fermée (9) comprenant une ligne de connexion (9a) disposée parallèlement à la ligne d'alimentation (8) pour être connectée à celle-ci, et des résistances (9b, 9c) montées en série aux deux extrémité de la ligne de connexion, la diode électroluminescente (9e) étant insérée entre les deux résistances.

2. Système de communication sans fil selon la revendication 1, dans lequel un substrat (6) sur lequel est monté l'élément d'antenne (7) est logé dans l'antenne réseau extérieure, et la ligne d'alimentation (8) et le circuit en boucle fermée (9) sont placés sur le substrat.

3. Système de communication sans fil selon l'une quelconque des revendications 1 et 2, dans lequel une diode de détection (9d) est montée en série avec la diode électroluminescente (9e).
